# EUROPEAN PATENT SPECIFICATION

(11) **EP 4 403 417 B1**
(45) Date of publication and mention of the grant of the patent: **08.04.2026**
(21) Application number: 22869166.3
(22) Date of filing: 13.09.2022
(51) Int. Cl.: B60Q 1/34, B60Q 1/26, F21S 43/14, F21S 43/239, F21S 43/243, F21S 43/249, F21S 43/20, F21S 43/31, F21S 43/40

(54) **THROUGH-TYPE LAMP MOUNTING STRUCTURE AND VEHICLE**
BEFESTIGUNGSSTRUKTUR FÜR DURCHLICHTLAMPE UND FAHRZEUG
STRUCTURE DE MONTAGE DE LAMPE DE TYPE TRAVERSANT ET VÉHICULE

(30) Priority: 16.09.2021 CN 202122253763 U
(43) Date of publication of application: 24.07.2024
(73) Proprietor: Beijing CHJ Information Technology Co., Ltd., Beijing 101399 (CN)
(72) Inventor: ZHANG, Shiying, Beijing 101399 (CN); SUN, Bolin, Beijing 101399 (CN)
(74) Representative: Maiwald GmbH
(86) International application number: PCT/CN2022/118325
(87) International publication number: WO 2023/040797

(56) References cited:
- CN-A- 110 242 932
- CN-U- 209 037 677
- CN-U- 210 345 324
- CN-U- 211 600 570
- CN-U- 211 780 836
- CN-U- 212 157 021
- CN-U- 213 656 632
- CN-U- 215 663 180
- DE-A1- 102017 110 907
- FR-A1- 3 104 237
- GB-A- 2 451 125
- JP-A- 2001 301 522
- JP-A- 2010 047 183
- JP-A- 2016 117 301
- JP-A- 2018 198 134
- US-A- 3 414 762
- US-A1- 2020 094 729

## Description

### FIELD

The present invention relates to the field of vehicles, and more particularly to a through-type lamp mounting structure and a vehicle.

### BACKGROUND

Vehicle lamps are eyes of vehicles, which have function of lighting and decoration. Nowadays, the design of vehicle lamp products has expanded from the demand for function to the pursuit of beauty. On the premise of satisfying the functionality of lamps, in order to significantly enhance the sense of science and technology of the vehicle modeling and brand value, many vehicle companies are innovating in the design of lamps to attract consumers.

US2020094729A1 discloses a vehicle body front structure, which includes a front hood covering a front space defined in a front part of a vehicle body from above, a front panel laterally extending along and under a front edge of the front hood and facing substantially in a fore and aft direction, the front panel defining an opening in an outboard part thereof, and a headlight attached to the vehicle body and facing the opening of the front panel from behind the front panel, the headlight is attached to a rear side of the front panel via a bracket which is positionally fixed to a periphery of the opening.

### SUMMARY

In order to solve the above technical problems or at least partially solve the above technical problems, the present invention provides a through-type lamp mounting structure and a vehicle.

The invention is set out in the appended set of claims.

The through-type lamp mounting structure provided in the embodiments of the present invention includes a housing coupled to the front-end frame; and two ends of the housing extend towards two sides of the vehicle and extend to the side lamp regions, which may maximize the lighting length, may light up a larger area, meet the modeling needs of consumers, and allow the vehicle lamp to more naturally reflect its streamline and lighting artistry. The end part of the housing is coupled to the fender through the coupling bracket, the jumping force at the end part of the vehicle lamp in the Z direction may be reduced, and the stiffness of the overall structure is improved. At the same time, the end part of the housing is coupled to the fender through the coupling bracket, which not only ensures the installation accuracy of the housing, but also meets the strength requirements of installation, improves the stability of the vehicle lamp, and reduces the problem of excessive gap and flush caused by sagging or forward and backward movement of the end part of the housing.

### BRIEF DESCRIPTION OF THE DRAWINGS

The drawings herein are incorporated into the specification and form a part of the specification, show embodiments that comply with the present invention, and are used to explain the principles of the present invention together with the specification.

In order to more clearly explain the technical solution of embodiments of the present invention or the related art, the drawings required to be used in the description of embodiments or the related art will be briefly described below, and it is obvious that for those skilled in the art, other drawings can be obtained according to these drawings without creative labor.
FIG. 1 is a cross sectional view of a through-type lamp mounting structure according to an embodiment of the present invention;
FIG. 2 is a cross sectional view of an inner cover and a thick wall in a through-type lamp mounting structure according to an embodiment of the present invention;
FIG. 3 is a structural schematic view of a through-type lamp mounting structure according to an embodiment of the present invention;
FIG. 4 is a structural schematic view of an outer cover in a through-type lamp mounting structure according to an embodiment of the present invention;
FIG. 5 is a structural schematic view of a housing in a through-type lamp mounting structure according to an embodiment of the present invention;
FIG. 6 is a partial enlarged view of a through-type lamp mounting structure according to an embodiment of the present invention;
FIG. 7 is a schematic view of a mounting structure of a through-type lamp mounting structure according to an embodiment of the present invention;
FIG. 8 is an end view of a mounting structure of a through-type lamp mounting structure according to an embodiment of the present invention.

References signs: 1, light source; 2, inner cover; 21, first light entrance surface; 22, first light exit surface; 3, thick wall; 31, first end; 32, second end; 33, second light entrance surface; 34, second light exit surface; 35, first protruding part; 36, second protruding part; 37, top surface; 38, bottom surface; 4, reflector; 5, housing; 6, outer cover; 61, third end; 62, fourth end; 63, third light exit surface; 91, front-end framework; 92, side lamp region; 93, fender; 94, coupling bracket; 95, first tolerance adjuster; 96, second tolerance adjuster; 961, fixing nut; 962, adjusting bolt; 963, adjusting stud; 97, fender mounting bracket.

### DETAILED DESCRIPTION

In order to more clearly understand the purpose, features and advantages of the present invention, solutions of the present invention will be further described below. It should be noted that the embodiments and the features in the embodiments of the present invention can be combined with each other without conflict.

In order to fully understand the present invention, many specific details are explained in the following description, but the present invention can also be implemented in other ways different from those described here; obviously, the embodiments in the description are only a part of embodiments of the present invention, not all of them.

In recent years, through-type lamps and vehicle logo lamps have become new hotspots in lamp design. Due to a relatively long through-type lamp mounting structure, it is easy to cause unstable installation.

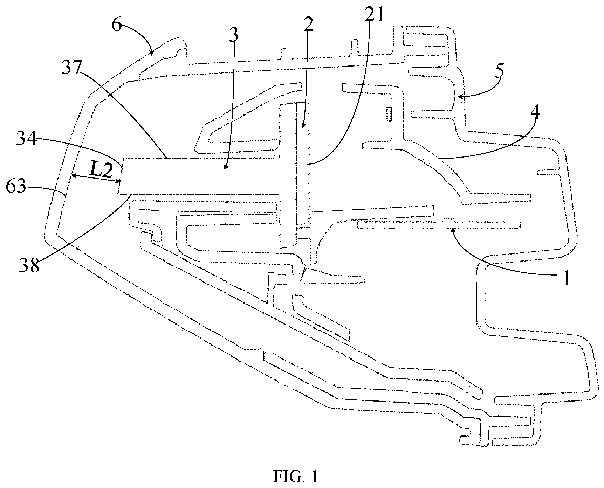

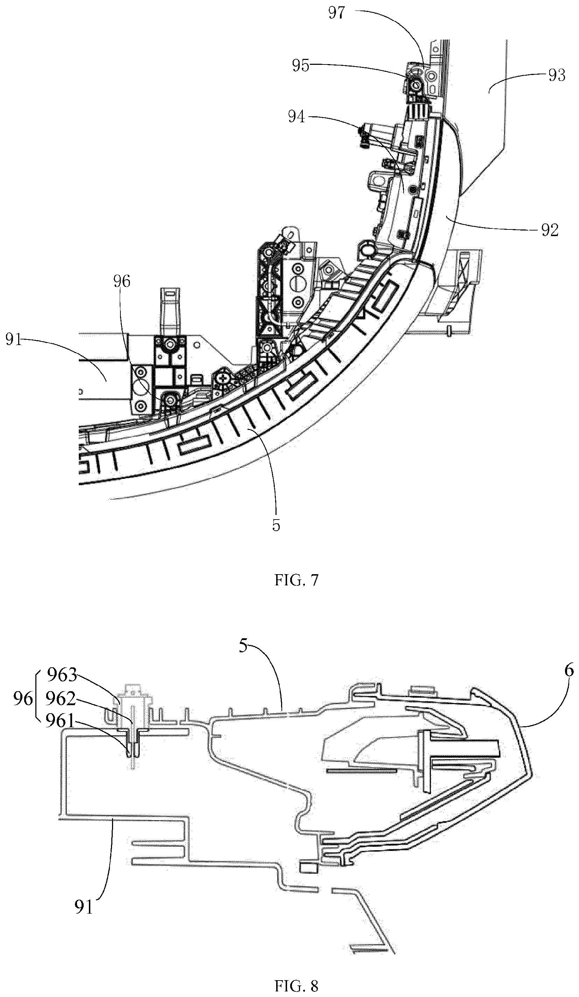

As illustrated in FIGS. 1, 2, 3, 4, 5, 6, 7, and 8, a through-type lamp mounting structure provided in the embodiments of the present invention includes a housing 5 coupled to a front-end frame 91; and two ends of the housing 5 extend towards two sides of a vehicle and extend to side lamp regions 92, which may maximize the lighting length, may light up a larger area, meet the modeling needs of consumers, and allow the vehicle lamp to more naturally reflect its streamline and lighting artistry. An end part of the housing 5 is coupled to a fender 93 through a coupling bracket 94, a jumping force at the end part of the vehicle lamp in a Z direction may be reduced, and the stiffness of the overall structure is improved. At the same time, the end part of the housing 5 is coupled to the fender 93 through the coupling bracket 94, which not only ensures the installation accuracy of the housing 5, but also meets the strength requirements of installation, improves the stability of the vehicle lamp, and reduces the problem of excessive gap and flush caused by sagging or forward and backward movement of the end part of the housing.

It should be noted that the side lamp region 92 refers to a region where turn signal lamps, clearance lamps, fog lamps (in the front end of the vehicle), and/or brake lamps (in the rear end of the vehicle) are installed.

In some specific embodiments, the fender 93 is coupled to the front-end frame 91 through a fender mounting bracket 97, the end part of the housing 5 is coupled to the fender mounting bracket 97 through the coupling bracket 94, the jumping force at the end part of the vehicle lamp in the Z direction may be reduced, and the stiffness of the overall structure is improved. At the same time, the end part of the housing 5 is coupled to the fender mounting bracket 97 through the coupling bracket 94, which not only ensures the installation accuracy of the housing 5, but also meets the strength requirements of installation, improves the stability of the lamp, and reduces the problem of excessive gap and flush caused by sagging or forward and backward movement of the end part of the housing.

The fender 93 abuts against the side lamp region 92, the housing 5 is coupled to the coupling bracket 94 through a plurality of mounting positions, and the mounting positions may be coupled through fasteners or through a structure of pin holes fitting with pins. In some embodiments, the housing 5 is coupled to the coupling bracket 94 through a fastener. A first tolerance adjuster 95 is arranged between the fender mounting bracket 97 and the coupling bracket 94. The first tolerance adjuster 95 is configured to absorb the deformation tolerance of the lamp, and may minimize the deformation of two ends of the lamp. The first tolerance adjuster 95 may be a tolerance adjustment nut, may be a manual adjustment nut, may be an automatic adjustment nut, and may also be other components that can adjust tolerance.

In some specific embodiments, a second tolerance adjuster 96 is arranged between the housing 5 and the front-end frame 91. The second tolerance adjuster 96 may adjust a position of the lamp in the Z direction, adjust an angle of the lamp on an X axis and an angle of the lamp on a Y axis, and may minimize the deformation of the two ends of the lamp. The second tolerance adjuster 96 may be a tolerance adjustment nut, may be a manual adjustment nut, may be an automatic adjustment nut, and may also be other components that can adjust tolerance.

In some specific embodiments, the second tolerance adjuster 96 includes a fixing nut 961, an adjusting bolt 962 and an adjusting stud 963. The fixing nut 961 is fixedly coupled to the front-end frame 91. The adjusting bolt 962 is coupled to the adjusting stud 963, the adjusting stud 963 is threadedly coupled to the housing 5, and the adjusting bolt 962 is threadedly coupled to the fixing nut 961. The relative position of the housing 5 in the Z direction may be adjusted by rotating the adjusting bolt 962 and the adjusting stud 963. The first tolerance adjuster 95 may have the same structure as the second tolerance adjuster 96.

In some specific embodiments, an elastic member is arranged between the housing 5 and the front-end frame 91, the deformation of the lamp in the Z direction may be reduced, the swing of the lamp in X, Y directions and the jumping force in the Z direction may also be absorbed, and the structural design is simple. In some embodiments, the elastic member may be made of a rubber material.

In some specific embodiments, the through-type lamp mounting structure further includes a front bumper, the front bumper is coupled to the front-end frame 91 through a front bumper bracket; and the housing 5 extends along a top edge of the front bumper. The jumping force of the lamp in the Z direction may be reduced, the stiffness of the overall structure is improved, and the problem of excessive gap and flush caused by sagging or forward and backward movement of the housing 5 is reduced.

In some specific embodiments, a light source 1, and a reflector 4, an inner cover 2 and a thick wall 3 arranged sequentially along a light exit direction are arranged in the housing. The reflector 4 is configured to reflect light emitted from the light source 1 to the inner cover 2, and emit the light through the inner cover 2 and the thick wall 3 sequentially. The inner cover 2 and the thick wall 3 each have a one-piece structure, and two ends of the light source 1, two ends of the inner cover 2 and two ends of the thick wall 3 extend towards two sides of a vehicle and extend to the side lamp regions 92.

The reflector 4 reflects the light emitted from the light source 1 and emits the light through the inner cover 2 and the thick wall 3 sequentially, so that a light may be emitted from a light-emitting surface uniformly. By means of the cooperation between the light source 1 and the inner cover 2 and the thick wall 3, an excellent light-emitting effect of the vehicle lamp may be achieved, the granular sensation during light emitting is eliminated, and the user experience is improved.

The light source 1, the inner cover 2 and the thick wall 3 each have a one piece structure, which removes physical gaps between a plurality of lamps from design, so that the structure is more continuous, forming a through-type seamless and uniform lighting effect in static and lit states. In the static state, the thick wall 3 has a through-type structure, so that the structure is uninterrupted and the visual effect is consistent. In the lit state, the light-emitting surface is one-piece and through-type, and the thick wall 3 of the one piece structure allows the light to be emitted from the light-emitting surface uniformly with no interruption and no obvious dark regions.

The two ends of the light source 1, the two ends of the inner cover 2 and the two ends of the thick wall 3 extend towards the two sides of the vehicle and extend to the side lamp regions, which may maximize the lighting length, light up a larger area, meet the modeling needs of consumers, and allow the lamp to more naturally reflect its streamline and lighting artistry.

The light source 1 is coupled to the reflector 4, the reflector is configured to reflect the light emitted from the light source 1 and emit the light through the inner cover 2 and the thick wall 3 sequentially, so that the light may be emitted from the light-emitting surface uniformly. By means of the cooperation of the light source 1, the inner cover 2 and the thick wall 3, the excellent light-emitting effect of the vehicle lamp may be achieved, the granular sensation during light emitting is eliminated, and the user experience is improved.

In some specific embodiments, the through-type lamp mounting structure further includes an outer cover 6, and the housing 5 is coupled to the outer cover 6 to define a light chamber. The light source 1, the inner cover 2, the thick wall 3 and the reflector 4 are arranged in the light chamber. In some embodiments, the outer cover 6 is provided with a protrusion extending in an extension direction of the outer cover 6, the housing 5 is provided with a slot extending along an extension direction of the housing 5, and the protrusion is clamped in the slot. By means of the cooperation between the continuous protrusion and the continuous slot, the contact area between the housing and the outer cover is increased, and the stability of coupling is improved.

In some specific embodiments, the slot includes a first side wall and a second side wall. A fastener passes through the first side wall, the protrusion, and the second side wall in sequence to fix the housing 5 and the outer cover 6. The protrusion is fixed to two side walls of the slot by the fastener, improving the stability of coupling. The fastener may be either a screw or a gun nail.

In some specific embodiments, the slot is provided with a structural adhesive. The housing 5 is coupled to the outer cover 6 through the structural adhesive, and the sealing performance between the housing 5 and the outer cover 6 may be improved. The structural adhesive includes but is not limited to a two-component silicone, a single-component silicone, a PUR hot melt adhesive, and a Sika adhesive.

Along the extension direction of the thick wall 3, the thick wall 3 includes a first end 31 and a second end 32, and a distance from the first end 31 to the second end 32 may be greater than 1500 mm, so that the light-emitting surface of the thick wall 3 may meet lighting needs. A length of thick wall 3 may be greater than 1500 mm, which may maximize the lighting length, light up a larger area, meet the modeling needs of consumers, allow the lamp to more naturally reflect its streamline and lighting artistry, and may better show the aesthetic feeling of modeling and lighting of the lamp to consumers. By means of the cooperation between the inner cover 2 and the thick wall 3, the light is emitted from the light-emitting surface uniformly. When the lamp is viewed from the front, the effect is beautiful, and the brightness of lighting is relatively uniform when the whole thick wall 3 is lit up, thus improving the user experience.

It should be noted that the inner cover 2 may be made of any materials that meet the light transmittance requirements. In some embodiments, the inner cover 2 is made of a material with a light transmittance greater than or equal to 90%. In some embodiments, the inner cover 2 is a thin-walled injection molded member for optical homogenization. The thick wall 3 may be made of any materials that meet the light transmittance requirements. According to the present invention, the thick wall 3 is made of a material with a light transmittance greater than or equal to 90%. According to the present invention, the thick wall 3 is an injection molded member for optical homogenization. The reflector 4 may be a metal material or a plastic material. In some embodiments, the reflector 4 is aluminized or non-aluminized plastic injection molded member for light focusing.

It should also be noted that the inner cover 2 may be made of a light diffusion material. In some embodiments, the inner cover 2 may be a polycarbonate (PC) light diffusion plastic, i.e., a light-transmitting but opaque light diffusion material particle formed by using a transparent PC plastic as a base material, adding a certain proportion of light diffusion agent and other additives, and polymerizing them through a special process. In some embodiments, the light diffusion materials may be made by adding materials that scatter light, such as BaSO₄, to a colorless transparent PC base material. In some embodiments, the light diffusion materials may further be made by adding materials that scatter light, such as macromolecular cluster materials, to the colorless transparent PC base material. In some embodiments, the inner cover 2 is made by adding BaSO4 or macromolecular cluster materials to the colorless transparent PC base material.

The inner cover 2 has a one-piece structure, which removes physical gaps between the plurality of lamps from design, so that the structure is more continuous, forming a through-type seamless and uniform lighting effect in static and lit states. In the static state, the inner cover 2 has a through-type structure, so that the structure is uninterrupted and the visual effect is consistent. In the lit state, the light-emitting surface is one-piece and through-type, and the inner cover 2 of the one piece structure allows the light to be emitted from the light-emitting surface uniformly with no interruption and no obvious dark regions.

The light source 1 includes a circuit board and an LED light source, and the circuit board may be a PCB board or a PCBA board. The circuit board is electrically coupled to the LED light source to allow the LED light source to be lit up or extinguished.

In some specific embodiments, the inner cover 2 includes a first light entrance surface 21 and a first light exit surface 22, and the thick wall 3 includes a second light entrance surface 33 and a second light exit surface 34, and a distance L1 (not illustrated in figures) from the first light exit surface 22 to the second light entrance surface 33 satisfies 0≤L1≤1 mm. The reflector 4 reflects the light emitted from the light source 1 to the inner cover 2 and emits the light through the inner cover 2 and the thick wall 3 sequentially, so that the light may be emitted from the second light exit surface 34 uniformly. By means of the cooperation between the inner cover 2 and the thick wall 3, the excellent light-emitting effect of the vehicle lamp may be achieved, the granular sensation during light emitting of the second light exit surface 34 is eliminated, and the user experience is improved. The distance from the first light exit surface 22 to the second light entrance surface 33 may be any numbers between 0 to 1 mm, such as 0, 0.2 mm, 0.4 mm, 0.6 mm, 0.8 mm, and 1mm. When the distance between the first light exit surface 22 and the second light entrance surface 33 is between 0 and 1 mm, the light may be emitted from the light-emitting surface uniformly, that is, it satisfies a linear ratio ≥ 75%. The linear ratio may reflect the uniformity of the linear distribution, which refers to the ratio of a minimum value min and a maximum value max of the brightness in a through line (i.e., a continuous extending line on the second light exit surface 34 of the thick wall 3 along the extension direction of the thick wall 3 (i.e., the Y direction)). For example, according to the structure of the present application, a brightness distribution (unit is nit) curve in the through line of the second light exit surface 34 is measured, which satisfies condition A: min/max>75%; and condition B: under the premise that the data is not homogenized, the linear data fluctuation range Δ < 10% of the minimum value min. Furthermore, the uniformity of the light-emitting surface of the lamp may also be measured by the brightness distribution of point domains, in which the brightness of a plurality of points (such as 10 to 100) in a certain area (such as a circle area, a quadrilateral area, etc.) on the light-emitting surface is measured, and the uniformity of the light-emitting surface is evaluated by comparing a ratio of the minimum value Nmin and the maximum value Nmax of point brightness (unit is nit) Nmin/Nmax (i.e., a regional ratio). For each point, multiple measurements are made, and an average value of the brightness measured servers as a brightness value of the point. The lamp according to the present application satisfies Nmin/Nmax>0.9 on the second light exit surface 34.

The smaller the distance from the first light exit surface 22 to the second light entrance surface 33, the better the uniformity of light emitting.

In some embodiments, when the distance from the first light exit surface 22 to the second light entrance surface 33 is 0, the first light exit surface 22 is snugly fitted to the second light entrance surface 33 without a gap, so that the light is emitted from the second light exit surface 34 uniformly, the granular sensation during light emitting of the second light exit surface 34 is eliminated, the excellent light-emitting effect of the vehicle lamp may be achieved, and the user experience is improved.

In some specific embodiments, along a vertical direction of the extension direction of the thick wall 3, the thick wall 3 includes a top surface 37 and a bottom surface 38. The bottom surface 38 is provided with a first protruding part 35, the top surface 37 is provided with a second protruding part 36, and the first protruding part 35 and the second protruding part 36 extend along the extension direction of the thick wall 3. The first protruding part 35 and the second protruding part 36 may avoid seeing the internal structure of the lamp from the thick wall 3, such as the light source 1, the reflector 4, etc., thus improving the sensory quality of the lamp. The thick wall 3 makes the structure more continuous, forming the through-type seamless and uniform lighting effect in static and lit states. In the static state, the thick wall 3 has the through-type structure, so that the structure is uninterrupted and the visual effect is consistent. In the lit state, the second light exit surface 34 is one-piece and through-type, the light is emitted from the second light exit surface 34 without interruption, and the thick wall 3 of the one piece structure allows the light to be emitted from the second light exit surface 34 uniformly with no obvious dark regions.

Along the vertical direction of the extension direction of the thick wall 3, a height H1 of the first protruding part 35 satisfies: 2 mm≤ H1≤20 mm, and a height H2 of the second protruding part 36 satisfies: 2 mm≤H2≤20 mm, which avoids forming a reflection of the internal installation structure on the thick wall 3, improves the sensory quality of the lamp, allows the light to be emitted from the second light exit surface 34 in a one-piece and through-type manner in the lit state, and allows the light to be emitted from the second light exit surface 34 with no interruption and no obvious dark regions.

Along a direction from the second light entrance surface 33 to the second light exit surface 34, a thickness T1 of the first protruding part 35 satisfies: 2 mm≤ T1≤10 mm, and a thickness T2 of the second protruding part 36 satisfies: 2 mm≤T2≤10 mm, which avoids forming a reflection of the internal installation structure on the thick wall 3, improves the sensory quality of the lamp, allows the light emitted from the second light exit surface 34 in one-piece and through-type manner in the lit state, and allows the light to be emitted from the second light exit surface 34 with no interruption and no obvious dark regions.

In some specific embodiments, the second light entrance surface 33, the second light exit surface 34, the top surface 37 and the bottom surface 38 each are a smooth surface, that is, the second light entrance surface 33, the second light exit surface 34, the top surface 37 and the bottom surface 38 are flat or optically polished surfaces, like the effect of a glass surface, and the sensory quality of the lamp is improved.

In some specific embodiments, the through-type lamp mounting structure further includes the housing 5 and the outer cover 6; the housing 5 is coupled to the outer cover 6 to define the light chamber. The light source 1, the inner cover 2, the thick wall 3 and the reflector 4 are arranged in the light chamber. The housing 5 may have a structure made of a black PP-GF30 material and configured to support the weight of the lamp. The outer cover 6 is a black or colorless transparent plastic injection molded member covered at an outermost side, which may be single-color or two-color or double-layer.

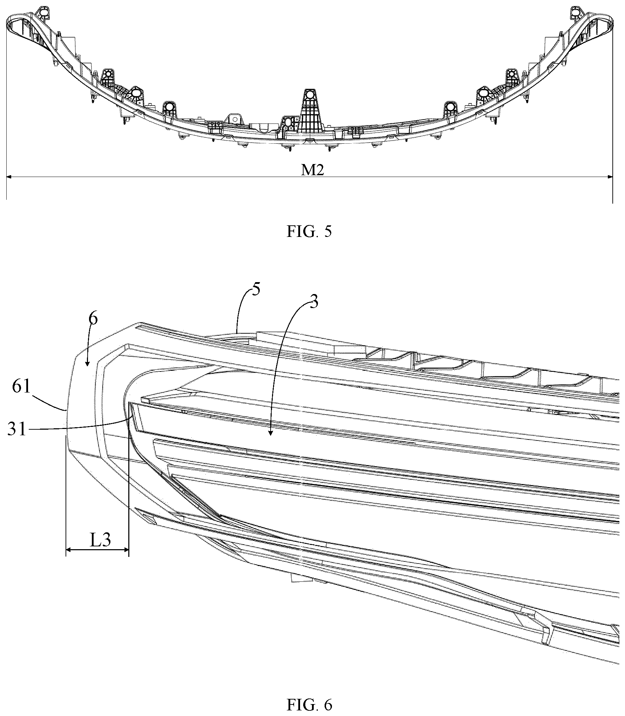

As illustrated in FIG. 5, the housing 5 extends along the extension direction of the thick wall 3, and a distance M2 between two end parts of the housing 5 in the extension direction is greater than or equal to 1500 mm, so that the housing 5 and the thick wall 3 have a substantially identical length, and the lighting length is maximized. The housing 5 has a one-piece structure, which removes physical gaps between the plurality of the lamps from design, so that the structure is more continuous, forming a through-type seamless and uniform lighting penetrating effect in static and lit states. In the static state, the structure is uninterrupted and the visual effect is consistent. In the lit state, the light-emitting surface is one-piece and through-type with no interruption and no obvious dark regions.

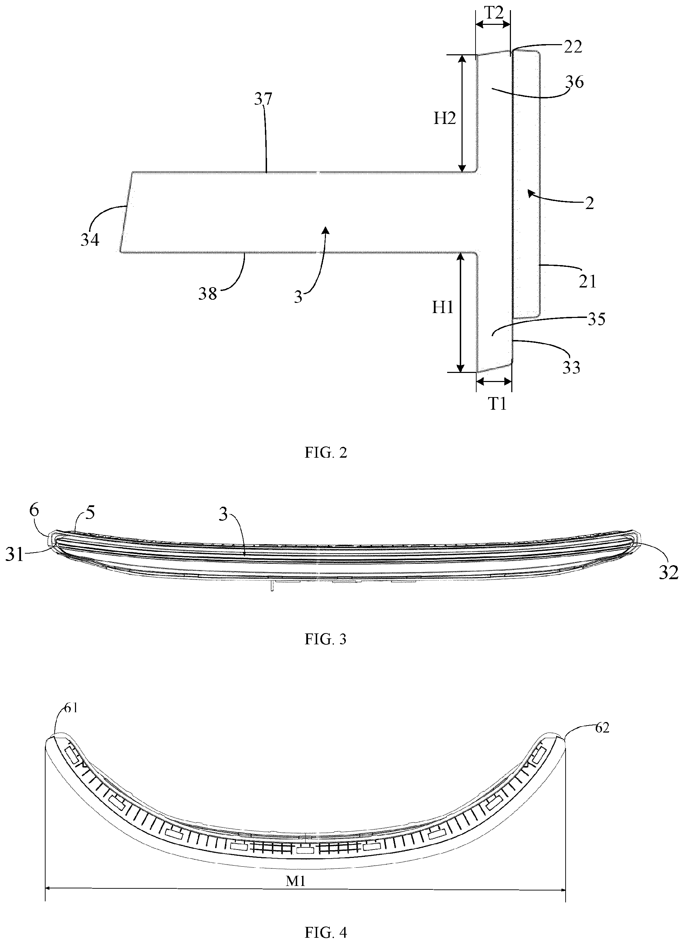

An extension length of the outer cover 6 matches the housing 5, as illustrated in FIG. 4, the outer cover 6 extends along the extension direction of the thick wall 3, and a distance M1 between two end parts of the outer cover 6 in the extension direction is greater than or equal to 1500 mm, so that the outer cover 6 and the thick wall 3 have a substantially identical length, and the lighting length is maximized. The outer cover 6 has a one-piece structure, which removes physical gaps between the plurality of lamps from design, so that the structure is more continuous, forming a through-type seamless and uniform lighting penetrating effect in static and illuminated states. In the static state, the structure is uninterrupted and the visual effect is consistent. In the lit state, the light-emitting surface is one-piece and through-type with no interruption and no obvious dark regions.

In some specific embodiments, the outer cover 6 includes a third light exit surface 63, and the third light exit surface 63 is parallel to the second light exit surface 34. The third light exit surface 63 is basically parallel to the second light exit surface 34, and the third light exit surface 63 and the second light exit surface 34 have a substantially identical length, which maximizes the lighting length, so that the lamp more naturally reflects its streamline and lighting artistry, and may better show aesthetic feeling of the modeling and lighting of the lamp to consumers. The third light exit surface 63 is parallel to the second light exit surface 34, so that the light emitted from the third light exit surface 63 is one-piece and through-type, the light is emitted from the third light exit surface 63 uniformly, and the light is emitted from the third light exit surface 63 with no interruption and no obvious dark regions. When the lamp is viewed from the front, the effect is beautiful, and the brightness of lighting is relatively uniform when the whole lamp is lit up, thus the excellent light-emitting effect of the vehicle lamp may be achieved, and the user experience is improved.

In some specific embodiments, a distance L2 between the third light exit surface 63 and the second light exit surface 34 satisfies: 3 mm≤L2≤10 mm. In the lit state, the light emitted from the third light exit surface 63 is one-piece and through-type, the light emitted from the third light exit surface 63 uniformly, and the light is emitted from the third light exit surface 63 with no interruption and no obvious dark regions. When the lamp is viewed from the front, the effect is beautiful, and the brightness of lighting is relatively uniform when the whole lamp is lit up, thus the excellent light-emitting effect of the vehicle lamp may be achieved, and the user experience is improved.

As illustrated in FIG. 6, along the extension direction of the outer cover 6, the outer cover 6 includes a third end 61 and a fourth end 62, a distance L3 from the first end 31 to the third end 61 satisfies: L3≤100 mm, and a distance L4 from the second end 32 to the fourth end 62 (not illustrated in figures) satisfies: L4≤100 mm, so that the thick wall 3 is as long as possible, and is as close as possible to a size of the outer cover 6, which may maximize the lighting length, may light up a larger area, allow the lamp to more naturally reflect its streamline and lighting artistry, and meet the modeling needs of consumers.

In some specific embodiments, the housing 5 is coupled to the outer cover 6 through the structural adhesive, and the sealing performance between the housing 5 and the outer cover 6 may be improved. The structural adhesive includes but is not limited to a two-component silicone, a single-component silicone, a PUR hot melt adhesive, and a Sika adhesive.

A vehicle provided in embodiments of the present invention includes the through-type lamp mounting structure provided in the embodiments of the present invention. Since the vehicle provided in the embodiments of the present invention has the same advantages as the through-type lamp mounting structure provided in the embodiments of the present invention, it is not repeated herein.

It should be noted that in the present invention, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device comprising a series of elements includes not only those elements, but also other elements that are not expressly listed, or also includes elements inherent in such a process, method, article, or device. Without further limitation, an element defined by the phrase "comprising a ..." does not exclude the presence of additional identical elements in the process, method, article or device comprising the element.

## Claims

1. A through-type lamp mounting structure for a vehicle, comprising:
a front-end frame (91), a fender (93) and a housing (5) coupled to the front-end frame (91);
two ends of the housing (5) extending towards two sides of the vehicle when the structure is mounted on the vehicle and extending to side lamp regions (92); and
an end part of the housing being coupled to the fender (93) through a coupling bracket (94),
**characterized in that** a light source (1), a reflector (4), an inner cover (2) and a thick wall (3) arranged sequentially along a light exit direction are arranged in the housing (5); the reflector (4) is configured to reflect light emitted from the light source (1) to the inner cover (2), and emit the light through the inner cover (2) and the thick wall (3) sequentially; and
**in that** the thick wall (3) is made of a material with a light transmittance greater than or equal to 90%, and the thick wall (3) is an injection molded member for optical homogenization; and
**in that** the through-type lamp mounting structure further comprises an outer cover (6), the housing (5) is coupled to the outer cover (6) to define a light chamber, and the light source (1), the inner cover (2), the thick wall (3) and the reflector (4) are arranged in the light chamber.

2. The through-type lamp mounting structure according to claim 1, wherein the fender (93) is coupled to the front-end frame (91) through a fender mounting bracket (97); and
a first tolerance adjuster (95) is arranged between the fender mounting bracket (97) and the coupling bracket (94).

3. The through-type lamp mounting structure according to claim 1 or 2, wherein a second tolerance adjuster (96) is arranged between the housing (5) and the front-end frame (91).

4. The through-type lamp mounting structure according to claim 3, wherein the second tolerance adjuster (96) comprises a fixing nut (961), an adjusting bolt (962) and an adjusting stud (963);
the fixing nut (961) is fixedly coupled to the front-end frame (91); and
the adjusting bolt (962) is coupled to the adjusting stud (963), the adjusting stud (963) is threadedly coupled to the housing (5), and the adjusting bolt (962) is threadedly coupled to the fixing nut (961).

5. The through-type lamp mounting structure according to any one of claims 1 to 4, wherein an elastic member is arranged between the housing (5) and the front-end frame (91).

6. The through-type lamp mounting structure according to any one of claims 1 to 5, further comprising a front bumper, wherein the front bumper is coupled to the front-end frame (91) through a front bumper bracket; and
the housing (5) extends along a top edge of the front bumper.

7. The through-type lamp mounting structure according to any one of claims 1 to 6, wherein the inner cover (2) and the thick wall (3) each have a one-piece structure; and
two ends of the light source (1), two ends of the inner cover (2) and two ends of the thick wall (3) extend towards two sides of the vehicle and extend to the side lamp regions (92).

8. The through-type lamp mounting structure according to claim 7, wherein the inner cover (2) comprises a first light entrance surface (21) and a first light exit surface (22), and the thick wall (3) comprises a second light entrance surface (33) and a second light exit surface (34);
a distance L1 from the first light exit surface (22) to the second light entrance surface (33) satisfies: 0≤L1≤1 mm; and
along a perpendicular direction of the extension direction of the thick wall (3), the thick wall (3) comprises a top surface (37) and a bottom surface (38), the bottom surface (38) is provided with a first protruding part (35), the top surface (37) is provided with a second protruding part (36), and the first protruding part (35) and the second protruding part (36) extend along the extension direction of the thick wall (3).

9. The through-type lamp mounting structure according to claim 8, wherein along the perpendicular direction of the extension of the thick wall (3), a height H1 of the first protruding part (35) satisfies: 2 mm≤ H1≤20 mm, and a height H2 of the second protruding part (36) satisfies: 2 mm≤H2≤20 mm.

10. The through-type lamp mounting structure according to claim 8 or 9, wherein along a direction perpendicular to the second light entrance surface (33), a thickness T1 of the first protruding part (35) satisfies: 2 mm≤T1≤10 mm, and a thickness T2 of the second protruding part (36) satisfies: 2 mm≤T2≤10 mm.

11. The through-type lamp mounting structure according to any one of claims 8 to 10, wherein each of the second light entrance surface (33), the second light exit surface (34), the top surface (37) and the bottom surface (38) is a smooth surface.

12. The through-type lamp mounting structure according to any one of claims 8 to 11, wherein the outer cover (6) comprises a third light exit surface (63), and the third light exit surface (63) is parallel to the second light exit surface (34).

13. The through-type lamp mounting structure according to claim 12, wherein a distance L2 between the third light exit surface (63) and the second light exit surface (34) satisfies: 3 mm≤L2≤10 mm.

14. A vehicle, comprising a through-type lamp mounting structure according to any one of claims 1 to 13.

## Patentansprüche

1. Durchlichtlampen-Befestigungsstruktur für ein Fahrzeug, umfassend:
einen vorderseitigen Rahmen (91), ein Schutzblech (93) und ein Gehäuse (5), das mit dem vorderseitigen Rahmen (91) verbunden ist;
wobei sich zwei Enden des Gehäuses (5) in Richtung von zwei Seiten des Fahrzeugs erstrecken, wenn die Struktur an dem Fahrzeug befestigt ist, und sich zu Seitenlampenbereichen (92) erstrecken; und
wobei ein Endteil des Gehäuses über einen Verbindungsbügel (94) mit dem Schutzblech (93) verbunden ist,
**dadurch gekennzeichnet, dass** in dem Gehäuse (5) eine Lichtquelle (1), ein Reflektor (4), eine innere Blende (2) und eine dicke Wand (3) angeordnet sind, die nacheinander entlang einer Lichtaustrittsrichtung angeordnet sind; wobei der Reflektor (4) dazu ausgelegt ist, aus der Lichtquelle (1) emittiertes Licht auf die innere Blende (2) zu reflektieren und das Licht nacheinander durch die innere Blende (2) und die dicke Wand (3) zu emittieren, und
dadurch, dass die dicke Wand (3) aus einem Material mit einer Lichtdurchlässigkeit von mehr als oder gleich 90 % hergestellt ist und die dicke Wand (3) ein spritzgegossenes Bauteil zur optischen Homogenisierung ist; und
dadurch, dass die Durchlichtlampen-Befestigungsstruktur ferner eine äußere Blende (6) umfasst, das Gehäuse (5) so mit der äußeren Blende (6) verbunden ist, dass eine Lichtkammer definiert ist, und die Lichtquelle (1), die innere Blende (2), die Dicke Wand (3) und der Reflektor (4) in der Lichtkammer angeordnet sind.

2. Durchlichtlampen-Befestigungsstruktur nach Anspruch 1, wobei das Schutzblech (93) über einen Schutzblech-Befestigungsbügel (97) mit dem vorderseitigen Rahmen (91) verbunden ist; und
eine erste Toleranzeinstellvorrichtung (95) zwischen dem Schutzblech-Befestigungsbügel (97) und dem Verbindungsbügel (94) angeordnet ist.

3. Durchlichtlampen-Befestigungsstruktur nach Anspruch 1 oder 2, wobei eine zweite Toleranzeinstellvorrichtung (96) zwischen dem Gehäuse (5) und dem vorderseitigen Rahmen (91) angeordnet ist.

4. Durchlichtlampen-Befestigungsstruktur nach Anspruch 3, wobei die zweite Toleranzeinstellvorrichtung (96) eine Feststellmutter (961), eine Einstellschraube (962) und einen Einstellzapfen (963) umfasst;
die Feststellmutter (961) fest mit dem vorderseitigen Rahmen (91) verbunden ist; und
die Einstellschraube (962) mit dem Einstellzapfen (963) verbunden ist, der Einstellzapfen (963) verschraubbar mit dem Gehäuse (5) verbunden ist und die Einstellschraube (962) verschraubbar mit der Feststellmutter (961) verbunden ist.

5. Durchlichtlampen-Befestigungsstruktur nach einem der Ansprüche 1 bis 4, wobei ein elastisches Bauteil zwischen dem Gehäuse (5) und dem vorderseitigen Rahmen (91) angeordnet ist.

6. Durchlichtlampen-Befestigungsstruktur nach einem der Ansprüche 1 bis 5, die ferner einen vorderen Stoßfänger umfasst, wobei der vordere Stoßfänger über einen Bügel des vorderen Stoßfängers mit dem vorderseitigen Rahmen (91) verbunden ist; und
das Gehäuse (5) sich entlang einer Oberkante des vorderen Stoßfängers erstreckt.

7. Durchlichtlampen-Befestigungsstruktur nach einem der Ansprüche 1 bis 6, wobei die innere Blende (2) und die dicke Wand (3) jeweils eine einteilige Struktur aufweisen; und
zwei Enden der Lichtquelle (1), zwei Enden der inneren Blende (2) und zwei Enden der dicken Wand (3) sich in Richtung von zwei Seiten des Fahrzeugs erstrecken und sich zu den Seitenlampenbereichen (92) erstrecken.

8. Durchlichtlampen-Befestigungsstruktur nach Anspruch 7, wobei die innere Blende (2) eine erste Lichteintrittsfläche (21) und eine erste Lichtaustrittsfläche (22) umfasst und die dicke Wand (3) eine zweite Lichteintrittsfläche (33) und eine zweite Lichtaustrittsfläche (34) umfasst;
eine Entfernung L1 von der ersten Lichtaustrittsfläche (22) zu der zweiten Lichteintrittsfläche (33) 0 ≤ L1 ≤ 1 mm erfüllt; und
die dicke Wand (3), entlang einer Richtung senkrecht zu der Erstreckungsrichtung der dicken Wand (3), eine obere Fläche (37) und eine untere Fläche (38) umfasst, wobei die untere Fläche (38) mit einem ersten vorstehenden Teil (35) versehen ist, die obere Fläche (37) mit einem zweiten vorstehenden Teil (36) versehen ist und sich der erste vorstehende Teil (35) und der zweite vorstehende Teil (36) entlang einer Erstreckungsrichtung der dicken Wand (3) erstrecken.

9. Durchlichtlampen-Befestigungsstruktur nach Anspruch 8, wobei, entlang der senkrechten Richtung der Erstreckung der dicken Wand (3), eine Höhe H1 des ersten vorstehenden Teils (35) 2 mm ≤ H1 ≤ 20 mm erfüllt, und eine Höhe H2 des zweiten vorstehenden Teils (36) 2 mm ≤ H2 ≤ 20 mm erfüllt.

10. Durchlichtlampen-Befestigungsstruktur nach Anspruch 8 oder 9, wobei, entlang einer Richtung senkrecht zu der zweiten Lichteintrittsfläche (33), eine Dicke T1 des ersten vorstehenden Teils (35) 2 mm ≤ T1 ≤ 10 mm erfüllt, und eine Höhe T2 des zweiten vorstehenden Teils (36) 2 mm ≤ T2 ≤ 10 mm erfüllt.

11. Durchlichtlampen-Befestigungsstruktur nach einem der Ansprüche 8 bis 10, wobei jede von der zweiten Lichteintrittsfläche (33), der zweiten Lichtaustrittsfläche (34), der oberen Fläche (37) und der unteren Fläche (38) eine glatte Fläche ist.

12. Durchlichtlampen-Befestigungsstruktur nach einem der Ansprüche 8 bis 11, wobei die äußere Blende (6) eine dritte Lichtaustrittsfläche (63) umfasst und die dritte Lichtaustrittsfläche (63) parallel zu der zweiten Lichtaustrittsfläche (34) ist.

13. Durchlichtlampen-Befestigungsstruktur nach Anspruch 12, wobei eine Entfernung L2 zwischen der dritten Lichtaustrittsfläche (63) und der zweiten Lichtaustrittsfläche (34) 3 mm ≤ L2 ≤ 10 mm erfüllt.

14. Fahrzeug, das die Durchlichtlampen-Befestigungsstruktur nach einem der Ansprüche 1 bis 13 umfasst.

## Revendications

1. Structure de montage de feux de type traversante pour un véhicule, comprenant :
un cadre d'extrémité avant (91), une aile (93) et un logement (5) accouplé au cadre d'extrémité avant (91) ;
deux extrémités du logement (5) s'étendant vers deux côtés du véhicule lorsque la structure est montée sur le véhicule et s'étendant jusqu'aux régions de feux latéraux (92) ; et
une partie d'extrémité du logement étant accouplée à l'aile (93) par l'intermédiaire d'un support d'accouplement (94),
**caractérisée en ce qu'**une source lumineuse (1), un réflecteur (4), un couvercle intérieur (2) et une paroi épaisse (3) agencés séquentiellement le long d'une direction de sortie de lumière sont agencés dans le logement (5) ; le réflecteur (4) est configuré pour réfléchir la lumière émise par la source lumineuse (1) vers le couvercle intérieur (2), et émettre la lumière à travers le couvercle intérieur (2) et la paroi épaisse (3) séquentiellement ; et
**en ce que** la paroi épaisse (3) est constituée d'un matériau ayant une transmission lumineuse supérieure ou égale à 90 %, et la paroi épaisse (3) est un organe moulé par injection pour homogénéisation optique ; et
**en ce que** la structure de montage de feux de type traversante comprend en outre un couvercle extérieur (6), le logement (5) est accouplé au couvercle extérieur (6) pour définir une chambre lumineuse, et la source lumineuse (1), le couvercle intérieur (2), la paroi épaisse (3) et le réflecteur (4) sont agencés dans la chambre lumineuse.

2. Structure de montage de feux de type traversante selon la revendication 1, dans laquelle l'aile (93) est accouplée au cadre d'extrémité avant (91) par l'intermédiaire d'un support de montage d'aile (97) ; et
un premier dispositif de réglage de tolérance (95) est agencé entre le support de montage d'aile (97) et le support d'accouplement (94).

3. Structure de montage de feux de type traversante selon la revendication 1 ou 2, dans laquelle un seond dispositif de réglage de tolérance (96) est agencé entre le logement (5) et le cadre d'extrémité avant (91).

4. Structure de montage de feux de type traversante selon la revendication 3, dans laquelle le second dispositif de réglage de tolérance (96) comprend un écrou de fixation (961), un boulon de réglage (962) et un goujon de réglage (963) ;
l'écrou de fixation (961) est accouplé au cadre d'extrémité avant (91) ; et
le boulon de réglage (962) est accouplé au goujon de réglage (963), le goujon de réglage (963) est accouplé par filetage au logement (5), et le boulon de réglage (962) est accouplé par filetage à l'écrou de fixation (961).

5. Structure de montage de feux de type traversante selon l'une des revendications 1 à 4, dans laquelle un organe élastique est agencé entre le logement (5) et le cadre d'extrémité avant (91).

6. Structure de montage de feux de type traversante selon l'une des revendications 1 à 5, comprenant en outre un pare-chocs avant, dans laquelle le pare-chocs avant est accouplé au cadre d'extrémité avant (91) par l'intermédiaire d'un support de pare-chocs avant ; et
le logement (5) s'étend le long d'un bord supérieur du pare-chocs avant.

7. Structure de montage de feux de type traversante selon l'une des revendications 1 à 6, dans laquelle le couvercle intérieur (2) et la paroi épaisse (3) présentent chacun une structure monobloc ; et
deux extrémités de la source lumineuse (1), deux extrémités du couvercle intérieur (2) et deux extrémités de la paroi épaisse (3) s'étendent vers deux côtés du véhicule et s'étendent jusqu'aux régions de feux latéraux (92).

8. Structure de montage de feux de type traversante selon la revendication 7, dans laquelle le couvercle intérieur (2) comprend une première surface d'entrée de lumière (21) et une première surface de sortie de lumière (22), et la paroi épaisse (3) comprend une seconde surface d'entrée de lumière (33) et une deuxième surface de sortie de lumière (34) ;
une distance L1 de la première surface de sortie de lumière (22) à la seconde surface d'entrée de lumière (33) satisfait : 0≤L1≤1 mm ; et
le long d'une direction perpendiculaire à la direction d'extension de la paroi épaisse (3), la paroi épaisse (3) comprend une surface supérieure (37) et une surface inférieure (38), la surface inférieure (38) est dotée d'une première partie saillante (35), la surface supérieure (37) est dotée d'une seconde partie saillante (36), et la première partie saillante (35) et la seconde partie saillante (36) s'étendent le long de la direction d'extension de la paroi épaisse (3).

9. Structure de montage de feux de type traversante selon la revendication 8, dans laquelle, le long de la direction perpendiculaire à l'extension de la paroi épaisse (3), une hauteur H1 de la première partie saillante (35) satisfait : 2 mm≤H1≤20 mm, et une hauteur H2 de la seconde partie saillante (36) satisfait : 2 mm≤H2≤20 mm.

10. Structure de montage de feux de type traversante selon la revendication 8 ou 9, dans laquelle selon une direction perpendiculaire à la seconde surface d'entrée de lumière (33), une épaisseur T1 de la première partie saillante (35) satisfait : 2 mm≤T1≤10 mm, et une épaisseur T2 de la seconde partie saillante (36) satisfait : 2 mm≤T2≤10 mm.

11. Structure de montage de feux de type traversante selon l'une des revendications 8 à 10, dans laquelle chacune de la seconde surface d'entrée de lumière (33), de la deuxième surface de sortie de lumière (34), de la surface supérieure (37) et de la surface inférieure (38) est une surface lisse.

12. Structure de montage de feux de type traversante selon l'une des revendications 8 à 11, dans laquelle le couvercle extérieur (6) comprend une troisième surface de sortie de lumière (63), et la troisième surface de sortie de lumière (63) est parallèle à la deuxième surface de sortie de lumière (34).

13. Structure de montage de feux de type traversante selon la revendication 12, dans laquelle une distance L2 entre la troisième surface de sortie de lumière (63) et la deuxième surface de sortie de lumière (34) satisfait : 3 mm≤L2≤10 mm.

14. Véhicule, comprenant une structure de montage de feux de type traversante selon l'une des revendications 1 à 13.
